(19) Europäisches Patentamt
European Patent Office
Office européen des brevets

(11) Publication number: **0 168 242 B1**

(12) **EUROPEAN PATENT SPECIFICATION**

(45) Date of publication of patent specification: **09.10.91**

(51) Int. Cl.5: **G02F 1/137**, G02F 1/133

(21) Application number: **85304896.5**

(22) Date of filing: **09.07.85**

(54) **Ferro-electric liquid crystal electro-optical device.**

(30) Priority: **10.07.84 JP 142944/84**
**15.10.84 JP 215366/84**
**12.04.85 JP 77783/85**

(43) Date of publication of application:
**15.01.86 Bulletin 86/03**

(45) Publication of the grant of the patent:
**09.10.91 Bulletin 91/41**

(84) Designated Contracting States:
**DE FR GB**

(56) References cited:
**EP-A- 0 091 637**
**EP-A- 0 091 661**
**DE-A- 3 427 597**
**US-A- 3 991 241**

**FERROELECTRICS, vol. 59, 1984, New York J.S. PATEL et al. "A reliable method of alignment for smedic liquid crystals" pages 137-144**

(73) Proprietor: **SEIKO INSTRUMENTS INC.**
**31-1, Kameido 6-chome Koto-ku**
**Tokyo 136(JP)**

(72) Inventor: **Harada, Takamasa**
**c/o Seiko Instr. & Electronics Ltd 6-31-1, Kameido**
**Koto-ku Tokyo(JP)**
Inventor: **Taguchi, Masaaki**
**c/o Seiko Instr. & Electronics Ltd 6-31-1, Kameido**
**Koto-ku Tokyo(JP)**
Inventor: **Ito, Kokichi**
**c/o Seiko Instr. & Electronics Ltd 6-31-1, Kameido**
**Koto-ku Tokyo(JP)**

(74) Representative: **Miller, Joseph et al**
**J. MILLER & CO. Lincoln House 296-302 High Holborn**
**London WC1V 7JH(GB)**

**EP 0 168 242 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to liquid crystal electro-optical devices.

Liquid crystal materials are currently used in many types of electro-optical device such as display devices, shutter arrays for printers and shutters for cameras. Liquid crystal materials have many advantages amongst which are that they enable the construction of small and thin electro-optical devices which have low electric power consumption.

Among liquid crystal materials recently investigated are ferro-electric liquid crystal compounds which exhibit the chiral smectic C phase (hereinafter referred to as the "SmC* phase") since they enable electro-optical devices having high-speed response and a memory characteristic to be constructed.

One known liquid crystal compound which exhibits the SmC* phase is 2-methyl butyl P-[(P-n-decyloxy benzylidene) amino cinnamate]. As shown in Figure 3 this liquid crystal compound is orientated in one direction, and has a helical structure, i.e. the direction of orientation is twisted in each molecular layer.

When this liquid crystal compound is poured into a gap between two plates B (Fig. 4) forming a liquid crystal cell, the gap being about 1$\mu$m smaller than the helical period (usually several $\mu$m), the liquid crystal molecules lose their helical structure, the molecular axis is parallel to the plates, and the molecular axis is inclined $+\theta°$ to the normal to the molecular layers of the liquid crystal compound.

Therefore, the liquid crystal compound has two domains, one of which is inclined $+\theta°$ in the clockwise direction from the normal to the layers, and the other of which is inclined $-\theta°$ in the anti-clockwise direction from the normal to the layers. These domains exist together as shown in Figure 5.

A liquid crystal compound exhibiting the SmC* phase has an electric dipole perpendicular to the molecular axis, and when one domain has the electric dipole directed upwardly, the other domain has the electric dipole directed downwardly. Therefore, when an electric field is applied between the plates B, the liquid crystal molecules orientate either in a position $+\theta°$ or $-\theta°$ inclined to the normal to the layers. When the applied electric field is reversed the molecular orientation is reversed and the molecules orientate at a position either $-\theta°$ or $+\theta°$ to the normal to the layers. Needless to say because the liquid crystal molecules have a polarising characteristic, when the liquid crystal cell is disposed between polarisers, optical bright-dark conditions occur depending upon the orientation of the liquid crystal molecules. Such a liquid crystal cell can be used as a liquid crystal display panel or a shutter array.

A liquid crystal panel utilising a liquid crystal compound exhibiting the SmC* phase has the advantage of a very high response speed of the order of microseconds and has a memory characteristic which is retained for long periods even when the electric field is no longer applied.

The fact that chiral smectic liquid crystal compounds have these characteristics was announced by Clark and Lagerwall (Appl. Phys. Lett. 36, 899, 1980). These authors claim that chiral smectic liquid crystal compounds have another characteristic, namely a "desirable threshold value characteristic". The threshold value characteristic in this case, is not the threshold value characteristic towards the effective voltage as in a twisted nematic type liquid crystal compound, but is the characteristic only towards the value of applied voltage. Our experiments and those of other research institutions have failed to confirm the existence of a desirable threshold value characteristic.

Therefore, we have developed a driving method where the on-off conditions are selected by a selecting voltage ±Vap, which has a predetermined pulse width and where the on-off conditions are memorised by AC pulses having equal positive and negative amplitude which is less than the voltage Vap. This is disclosed in European Patent Application No. 84308546.5.

Figure 6 illustrates waveforms of signals used in this driving method. The electric potential applied to scanning electrodes is +Vap and -Vap at the selecting time When a chiral smectic liquid crystal compound is driven by these signals whether the display is good or had depends greatly on the orientation of the liquid crystal molecules. The reason for this is that the molecular orientation achieved by uni-axial alignment treatment is stable but the condition where voltages applied and the molecules are aligned parallel to the plates of the liquid crystal cell causes large deformation.

Figure 7 shows the molecular orientation when the surfaces of two plates are subject to a uni-axial alignment treatment. The layers are thought to be inclined to the thicker part of the plate and, when referring to one molecule, assuming an imaginary cone as in Figure 3, it is thought to be situated at the top surface of the cone as shown in Figure 8. The molecules are thought to he parallel to the plate, and situated at the top surface of the imaginary cone.

It is necessary to situate the molecules parallel to the plate, stable from the starting time of the orientation condition at one of the two molecular positions on the centre surface of the imaginary cone.

Conventionally, to obtain this condition, a method disclosed by Professor Fukuda of Tokyo Institute of Technology, is known, where the molecules are orientated from the side with a spacer, and then take the

position parallel to the plates on the centre surface of the imaginary cone. However, with this method, the spacer holding the side orientation force must be set in the cell in large numbers, and mass production is difficult.

US-A-3,991,241 discloses a liquid crystal device having a pair of parallel substrates between which there is disposed a smectic liquid crystal material. An orientation imparting layer is formed on the liquid crystal side of one of the substrates.

According to one aspect of the present invention, there is provided a ferro-electric liquid crystal electro-optical device comprising two, parallel plates with a ferro-electric chiral smectic liquid crystal material in a gap therebetween, said gap being less than the helical pitch of the liquid crystal material, one of the plates having an uni-axial alignment characteristic on a surface thereof in contact with the liquid crystal material and the other plate having either a random homogeneous alignment characteristic or no alignment characteristic on the surface thereof in contact with the liquid crystal material.

Preferably said uni-axial alignment characteristic is obtained by rubbing a thin layer of polyimide, polyvinyl alcohol, a fluorine-containing polymer, silane or silicon dioxide provided on the said surface of said one plate.

Said random homogeneous alignment characteristic may be obtained by a homeotropic alignment treatment to said surface of said other plate and thereafter a heat treatment.

Said random homogeneous alignment characteristic may be biased in the direction of the uni-axial alignment characteristic.

Preferably the angle between the direction of the bias and the direction of the uni-axial alignment treatment on said one plate is substantially equal to the tilt angle of the liquid crystal material.

In one embodiment said random homogeneous alignment characteristic is biased in the direction of the uni-axial alignment treatment by rubbing said surface of said other plate prior to said heat treatment.

In another embodiment said random homogeneous alignment characteristic is biased in the direction of the uni-axial alignment treatment by rubbing said surface of said other plate after said heat treatment.

In a yet further embodiment said random homogeneous alignment characteristic is biased in the direction of the uni-axial alignment treatment by rubbing said surface of said other plate prior to said homeotropic alignment treatment.

In a still further embodiment said random homogenous alignment characteristic is obtained by providing a layer of polyimide, epoxy, polyvinyl alcohol, fluorine-containing polymer, polyurethane, silane, phenol, urea, silicon dioxide or magnesium fluoride on said surface of said other plate, without rubbing.

In another embodiment said random homogeneous alignment characteristic is obtained by providing no alignment layer on said surface of said other plate.

The ferro-electric liquid crystal electro-optical device may be a display device or a shutter for a printer.

According to yet another aspect of the present invention the ferro-electric liquid crystal electro-optical device may include means for selecting on-off conditions by a selecting voltage ± Vap and for memorising the on-off conditions with an AC pulse whose width is smaller than that of the said voltage Vap and which has equal positive and negative amplitude.

The invention is illustrated, merely by way of example, in the accompanying drawings, in which:-

Figure 1 is a cross-sectional schematic view of an embodiment of a ferro-electric liquid crystal electro-optical device according to the present invention;

Figure 2 is a perspective view of a plate showing rubbing directions;

Figure 3 is an illustration of the molecular arrangement around the spiral axis of a liquid crystal compound exhibiting the SmC* phase;

Figure 4 illustrates the molecular arrangement of a liquid crystal compound exhibiting the SmC* phase in a liquid crystal cell having a small gap between the plates;

Figure 5 illustrates molecular orientation relative to the normal to the layers of a liquid crystal compound exhibiting the SmC* phase;

Figure 6 shows driving waveforms of signals according to a driving method for driving a chiral smectic liquid crystal electro-optical device in a time-sharing mode;

Figure 7 is a schematic illustration of molecular orientation where uni-axial alignment treatment is performed on the inner surfaces of two plates of a liquid crystal cell; and

Figure 8 is an enlarged perspective view of an imaginary cone of a molecule of a liquid crystal material exhibiting the SmC* phase.

As a result of repeating various experiments and research we have devised the following method for orientating molecules in two stable positions parallel to plates of a liquid crystal cell and to suit the driving method disclosed in our European Patent Application No. 84308546.5. Essentially in this method uni-axial alignment is conducted on one plate of the liquid crystal cell and random homogeneous alignment

treatment which no directional characteristic or no alignment treatment is conducted on the other plate.

Random homogeneous alignment treatment means treatment which aligns the liquid crystal molecules close to parallel to the plates but does not let the molecules have any definite directional characteristic, but, this treatment includes alignment that lets the molecules have a weak uni-axial alignment characteristic by a weak rubbing treatment, etc.

Onto a film which is subject to random homogeneous alignment treatment with no directional characteristic the liquid crystal molecules are attached horizontally at random. Meanwhile, the uni-axial alignment treatment on the other plate orientates the molecules horizontally in one unique direction.

The alignment condition of the molecules inside the liquid crystal cell in the above orientation will be considered with reference to Figure 1 which shows a ferro-electric liquid crystal electro-optical device according to the present invention. Liquid crystal molecules 3 hardly move on a uni-axial alignment film 1b. It is assumed that several molecular layers close to the molecules attached on to the uni-axial alignment film 1b, either do not move at all or move only by a small amount. This is referred to as the uni-axial alignment region. On the other hand, several molecular layers which are regulated by the random homogeneous alignment of a film 2b are also thought as not moving much and are thought to be in a condition close to the random homogeneous alignment in the case where no alignment treatment is conducted on the film 2b. This is referred to as the random homogeneous alignment region. The uni-axial alignment region regulates the orientation direction of the molecules forming the chiral smectic liquid crystal molecules into a uniform domain.

Meanwhile, the random homogeneous alignment region serves to form an interface between the domain of the uni-axial alignment region and the domain grown under the effect of the uni-axial alignment region, into a free interface. "Free" in this case means that the mutual effect between the upper and lower molecules having the interface as a border, is very small. Therefore, the liquid crystal molecules 3 grown from the uni-axial alignment film 1b can exist in the most stable position without being forced. That position is horizontal to a plate 1, and is situated on the crossing line of the imaginary cone and the centre surface. This position is the $\pm\theta$ position already discussed.

EXAMPLE 1

A polyimide thin film was formed by printing or dipping, and then rubbed in one direction to form a uni-axial alignment film. A silicon dioxide sputtered plate was immersed in 0.01 to 5.0 weight % organic silane homeotropic alignment compound water solution, washed and dried, then heat treatment was conducted for about 30 minutes at about 300°C to form a random homogeneous alignment film.

The suitability of the driving method described above depends greatly on the temperature of the heat treatment. A temperature of 250°C to 300°C is, therefore, preferred.

As organic silane homeotropic alignment compounds, the following are suitable:

$CH_3(CH_2)_{15}-Si(OCH_3)_3$

$CH_3(CH_2)_{17}-Si(OC_2H_5)_3$

$CH_3(CH_2)_{15}SiCl_3$

$CH_3-NH-(CH_2)_{18}Si(OCH_3)_3$

$NH_2-(CH_2)_{12}Si(OCH_3)_3$

$(CH_3O)_3Si-(CH_2)_3-N^+(CH_3)_2-(CH_2)_{17}-CH_3 \cdot Cl^-$

$NH_2(CH_2)_2-NH-(CH_2)_{15}Si(OC_2H_5)_3$

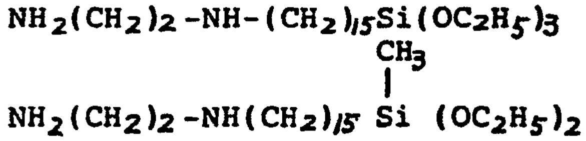

$NH_2(CH_2)_{11}-NH-(CH_2)_3Si(OCH_3)_3$

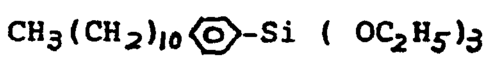

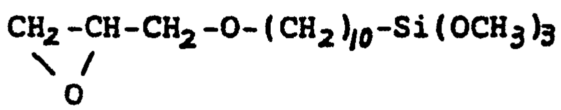

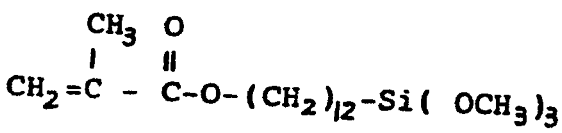

EXAMPLE 2

The uni-axial alignment treatment was the same as in Example 1. As to random homogeneous alignment treatment an organic silane compound was utilized. The alignment treatment with the organic silane compound was as follows: a silicon dioxide sputtered plate was immersed in 0.01 to 5.0 weight % of organic silane compound water solution, washed and dried.

As the organic silane compound, the following compounds are suitable:

$CH_3-NH-(CH_2)_3-Si(OCH_3)_3$,

$NH_2-(CH_2)_2-NH-(CH_2)_3-Si(OCH_3)_3$,

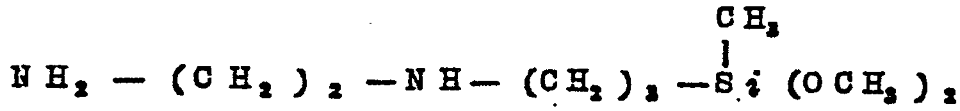

$NH_2-(CH_2)_3-Si(OC_2H_5)_3$

$Si(OC_2H_5)_4$, $CH_3-Si(OCH_3)_3$,

$CH_3-(CH_2)_4-Si(OC_2H_5)_3$,

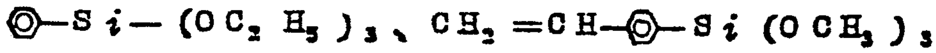

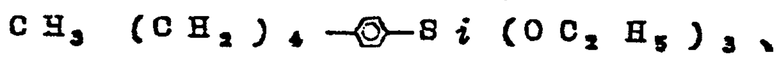

$CH_3-(CH_2)_7-Si(OCH_3)_3$,

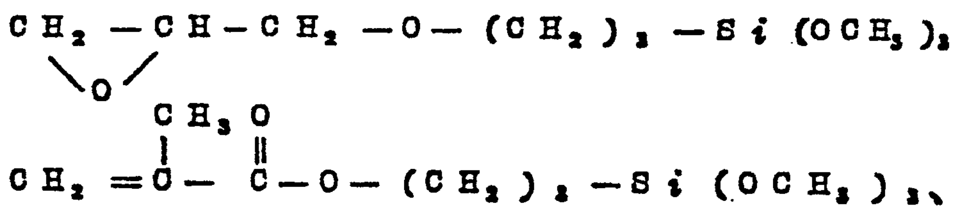

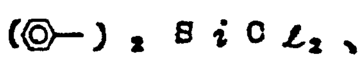

## EXAMPLE 3

Referring to Figure 1, one plate 1 of the ferro-electric liquid crystal electro-optical device according to the present invention consisted of a polyimide thin film formed on a surface of a transparent electrically insulated plate 1a of, for example, glass, by printing or dipping. The polyimide thin film was rubbed in one direction to form the uni-axial alignment film 1b.

The plate 2 opposite the plate 1 and parallel thereto consisted of an electrically insulating transparent plate 2a on which the random homogeneous alignment film 2b was provided. This film was provided by rubbing treatment in a direction B (Fig. 2) at an angle $\phi$ to the direction A of rubbing of the plate 1. The angle $\phi$ corresponds to the tilt angle of the molecules of the liquid crystal compound 3 which is to be enclosed between the plates 1,2.

The explanation of the method to form the random homogeneous alignment film 2b is as follows. First, a film of silicon dioxide ($SiO_2$) was formed on the plate 2a by means of, for example, vaccum evaporation. Then uni-axial rubbing treatment was conducted at an angle $\phi$ to the direction of rubbing of the uni-axial alignment film 1b on the plate 1. Next, this plate was immersed into a water solution of organic silane homeotropic alignment compound, washed and dried, and the silane homeotropic alignment treatment was conducted on it, then, a heat treatment process was performed for about 1 hour at 300 °C. A random homogeneous alignment film 1b biassed in a uni-axial direction was formed.

As the above organic silane homeotropic alignment compound, the compounds described in relation to Example 1 can be utilised.

## EXAMPLE 4

As a modification of Example 3, after application of the silane homeotropic compound on the silicon

dioxide film, the uni-axial rubbing was conducted in a direction at an angle $\phi$ to the alignment direction of the uni-axial alignment layer 1b on the plate 1. Heat treatment was then conducted for about 1 hour at 300°C and the random homogeneous alignment film which was biassed in a uni-axial direction was formed.

EXAMPLE 5

As a further modification of Examples 3 and 4, the silane homeotropic alignment compound was formed on the silicon dioxide film, heat treatment was conducted for about 1 hour at 300°C, and then uni-axial rubbing treatment was conducted in a direction at an angle to the alignment direction of the uni-axial alignment film. Thereupon, a random homogeneous alignment film which was biassed in the uni-axial direction was formed. The plates 1,2 have respective alignment treated surfaces with a predetermined gap, and a ferro-electric smectic liquid crystal material 3 which consisted of S-4- (2-methyl)butyl-resol ciliden-4-alkyl n-octyl aniline

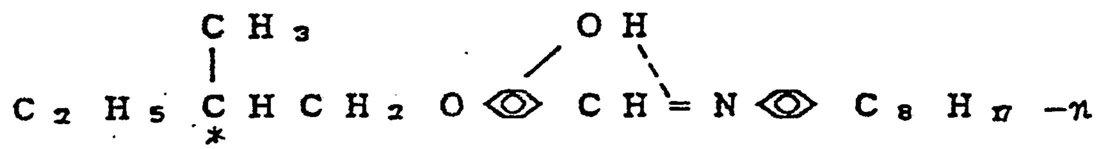

and P-n-octyl phenyl P' 6-methyl octyl oxybenzoate

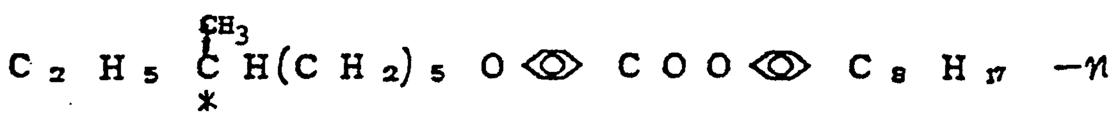

in admixture in equal proportions, was enclosed between the plates. Polarisers 4,5 were disposed on the surface of the plates 1,2 respectively to form a liquid crystal panel.

The liquid crystal panel, as stated in Examples 1 to 5, not only offered a background with a uniform display, but also have a very fast response characteristic at around 300 µsec, when an electric field was applied.

EXAMPLE 6

In this embodiment, a transparent electrode was formed on the electrically insulated transparent plate 2a, and a polyimide thin film was formed by printing, dipping and baking without rubbing was formed on this transparent plate to produce a random homogeneous alignment film 2b. This random homogeneous alignment film lets adjacent liquid crystal molecules orientate parallel to the plates, but does not let the molecules have any directional characteristic. The plate 1 has a transparent electrode 4 on the electrically insulating transparent plate 1a, and on the surface of the plate 1a, a polyimide thin film was mounted, and a uni-axial alignment film 1b was formed after the surface of this thin film had been rubbed in one direction only. These two plates 1,2 were disposed with a gap therebetween less than the helical pitch of the liquid crystal compound with the random homogeneous alignment film 2b and the uni-axial alignment film 1b being parallel and facing each other.

Furthermore, in this Example, the uni-axial alignment film and the random homogeneous alignment film were both formed by a polyimide film on the surface of the plates but materials other than polyimide can be used such as polyvinyl alcohol, a fluoro resin, e.g. a fluorine-containing polymer, silane or an oblique vacuum evaporated silicon dioxide film can be used for the uni-axial alignment film. As the material of the random homogeneous alignment film apart from polyimide, organic films such as epoxy, polyvinyl alcohol, fluoro resin e.g. fluorine-containing polymer, polyurethane, silane, phenyl, urea,and inorganic films which are vacuum evaporated such as silicon dioxide or magnesium fluoride can be utilised.

The random homogeneous alignment treatment of the plate 2 or the film 2b is not essential and the plate 2b can have no orientation process performed on it.

As stated above, in the present invention, because uni-axial alignment treatment is conducted on one of the two plates that compose the liquid crystal panel and random homogeneous alignment or no alignment process is conducted on the other plate, the high speed response ability of the chiral smectic liquid crystal compound or material is fully efficient, and the smectic liquid crystal material can hold the bi-stable

condition and have a good memorising characteristic, and by initially orientating liquid crystal molecules in a direction which responds to the uni-axial alignment direction, it is possible to achieve a liquid crystal panel having a uniform background.

## Claims

1. A smectic liquid crystal electro-optical device comprising two parallel plates (1, 2) with a ferro-electric chiral smectic liquid crystal material (3) in a gap therebetween, said gap being less than the helical pitch of the liquid crystal material, one of the plates having an uni-axial alignment characteristic on a surface thereof in contact with the liquid crystal material and the other plate having either a random homogeneous alignment characteristic or no alignment characteristic on the surface thereof in contact with the liquid crystal material.

2. A ferro-electric liquid crystal electro-optical device as claimed in claim 1 characterised in that said uni-axial alignment characteristic is obtained by rubbing a thin layer of polyimide, polyvinyl alcohol, a flourine-containing polymer, silane or silicon dioxide provided on the said surface of said one plate.

3. A ferro-electric liquid crystal electro-optical device as claimed in claim 1 or 2 characterised in that said random homogeneous alignment characteristic is obtained by a homeotropic alignment treatment to said surface of said other plate and thereafter a heat treatment.

4. A ferro-electric liquid crystal electro-optical device as claimed in any preceding claim characterised in that said random homogeneous alignment characteristic is biased in the direction of the uni-axial alignment characteristic.

5. A ferro-electric liquid crystal electro-optical device as claimed in claim 4 characterised in that the angle between the direction of the bias and the direction of the uni-axial alignment treatment on said one plate is substantially equal to the tilt angle of the liquid crystal material.

6. A ferro-electric liquid crystal electro-optical device as claimed in claim 3 characterised in that said random homogeneous alignment characteristic is biased in the direction of the uni-axial alignment treatment by rubbing said surface of said other plate prior to said heat treatment.

7. A ferro-electric liquid crystal electro-optical device as claimed in claim 3 characterised in that said random homogeneous alignment characteristic is biased in the direction of the uni-axial alignment treatment by rubbing said surface of said other plate after said heat treatment.

8. A ferro-electric liquid crystal electro-optical device as claimed in claim 3 characterised in that said random homogeneous alignment characteristic is biased in the direction of the uni-axial alignment treatment by rubbing said surface of said other plate prior to said homeotropic alignment treatment.

9. A ferro-electric liquid crystal electro-optical device as claimed in claim 1 characterised in that said random homogeneous alignment characteristic is obtained by providing a layer of polyimide, epoxy, polyvinyl alcohol, fluorine-containing polymer, polyurethane, silane, phenol, urea, silicon dioxide or magnesium fluoride on said surface of said other plate, without rubbing.

10. A ferro-electric liquid crystal electro-optical device as claimed in claim 1 characterised in that said random homogeneous alignment characteristic is obtained by providing no alignment layer on said surface of said other plate.

11. A ferro-electric liquid crystal electro-optical device as claimed in any preceding claim characterised by including means for selecting on-off conditions by a selecting voltage ± Vap and for memorising the on-off conditions with an AC pulse whose width is smaller than that of the said voltage Vap and which has equal positive and negative amplitude.

12. A ferro-electric liquid crystal electro-optical device as claimed in any preceding claim characterised in that the device is a display device.

13. A ferro-electric liquid crystal electro-optical device as claimed in any of claims 1 to 11 characterised in that the device is a shutter for a printer.

**Revendications**

1. Un dispositif électro-optique à cristal liquide smectique comprenant deux lames parallèles (1, 2) avec une matière consistant en un cristal liquide smectique chiral ferroélectrique (3) dans un espace entre les deux lames, cet espace étant inférieur au pas de l'hélice du cristal liquide, une première des lames ayant une caractéristique d'alignement uniaxial sur une surface de cette lame qui est en contact avec le cristal liquide, et la seconde lame ayant soit une caractéristique d'alignement homogène aléatoire, soit aucune caractéristique d'alignement, sur sa surface qui est en contact avec le cristal liquide.

2. Un dispositif électro-optique à cristal liquide ferroélectrique selon la revendication 1, caractérisé en ce que la caractéristique d'alignement uniaxial est obtenue en frottant une couche mince de polyimide, d'alcool polyvinylique, d'un polymère contenant du fluor, de silane ou de dioxyde de silicium, qui est formée sur la surface précitée de la première lame.

3. Un dispositif électro-optique à cristal liquide ferroélectrique selon la revendication 1 ou 2, caractérisé en ce que la caractéristique d'alignement homogène aléatoire est obtenue par un traitement d'alignement homéotrope de la surface précitée de la seconde lame, et ensuite par un traitement thermique.

4. Un dispositif électro-optique à cristal liquide ferroélectrique selon l'une quelconque des revendications précédentes, caractérisé en ce que la caractéristique d'alignement homogène aléatoire présente une orientation préférentielle dans la direction de la caractéristique d'alignement uniaxial.

5. Un dispositif électro-optique à cristal liquide ferroélectrique selon la revendication 4, caractérisé en ce que l'angle entre la direction de l'orientation préférentielle et la direction du traitement d'alignement uniaxial sur la première lame est pratiquement égal à l'angle de rotation caractéristique des molécules du cristal liquide.

6. Un dispositif électro-optique à cristal liquide ferroélectrique selon la revendication 3, caractérisé en ce que la caractéristique d'alignement homogène aléatoire est orientée de façon préférentielle dans la direction du traitement d'alignement uniaxial en frottant la surface précitée de la seconde lame avant le traitement thermique.

7. Un dispositif électro-optique à cristal liquide ferroélectrique selon la revendication 3, caractérisé en ce que la caractéristique d'alignement homogène aléatoire est orientée de façon préférentielle dans la direction du traitement d'alignement uniaxial en frottant la surface précitée de la seconde lame après le traitement thermique.

8. Un dispositif électro-optique à cristal liquide ferroélectrique selon la revendication 3, caractérisé en ce que la caractéristique d'alignement homogène aléatoire est orientée de façon préférentielle dans la direction du traitement d'alignement uniaxial en frottant la surface précitée de la seconde lame avant le traitement d'alignement homéotrope.

9. Un dispositif électro-optique à cristal liquide ferroélectrique selon la revendication 1, caractérisé en ce que la caractéristique d'alignement homogène aléatoire est obtenue en formant une couche de polyimide, d'époxy, d'alcool polyvinylique, d'un polymère contenant du fluor. de polyuréthane, de silane, de phénol, d'urée, de dioxyde de silicium ou de fluorure de magnésium sur la surface précitée de la seconde lame, sans frottement.

10. Un dispositif électro-optique à cristal liquide ferroélectrique selon la revendication 1, caractérisé en ce que la caractéristique d'alignement homogène aléatoire est obtenue en ne formant aucune couche d'alignement sur la surface précitée de la seconde lame.

11. Un dispositif électro-optique à cristal liquide ferroélectrique selon l'une quelconque des revendications précédentes, caractérisé en ce qu'il comprend des moyens conçus pour sélectionner des conditions de transmission/blocage par une tension de sélection ±Vap et pour mémoriser les conditions de

transmission/blocage avec des impulsions alternatives dont la hauteur est inférieure à celle de la tension Vap et qui a des amplitudes positive et négative égales.

12. Un dispositif électro-optique à cristal liquide ferroélectrique selon l'une quelconque des revendications précédentes, caractérisé en ce qu'il consiste en un dispositif de visualisation.

13. Un dispositif électro-optique à cristal liquide ferroélectrique selon l'une quelconque des revendications 1 à 11, caractérisé en ce qu'il consiste en un obturateur pour une imprimante.

## Patentansprüche

1. Elektrooptische smektische Flüssigkristallanordnung mit zwei parallelen Platten (1, 2), zwischen denen sich ein ferroelektrisches chirales smektisches Flüssigkristallmaterial (3) befindet, wobei ein Spalt zwischen den parallelen Platten kleiner als die schraubenförmige Steigung des Flüssigkristallmaterials ist, eine der Platten eine einachsige Ausrichtung auf einer mit dem Flüssigkristallmaterial in Kontakt stehenden Oberfläche besitzt und wobei die andere Platte entweder eine willkürliche homogene Ausrichtung oder eine Nichtausrichtung auf der mit dem Flüssigkristallmaterial in Kontakt stehenden Oberfläche besitzt.

2. Ferroelektrische elektrooptische Flüssigkristallanordnung nach Anspruch 1, **dadurch gekennzeichnet,** daß die einachsige Ausrichtung durch Anreiben einer dünnen Schicht aus Polyimid, Polyvinylalkohol, eines Fluor enthaltenden Polymers, Silans oder Siliziumdioxids auf der Oberfläche der einen Platte realisiert ist.

3. Ferroelektrische elektrooptische Flüssigkristallanordnung nach Anspruch 1 oder 2, **dadurch gekennzeichnet,** daß die willkürliche homogene Ausrichtung durch eine homöotrope Ausrichtungsbehandlung der Oberfläche der anderen Platte und nachfolgende Wärmebehandlung realisiert ist.

4. Ferroelektrische elektrooptische Flüssigkristallanordnung nach den vorhergehenden Ansprüchen, **dadurch gekennzeichnet,** daß die willkürliche homogene Ausrichtung in Richtung der einachsigen Ausrichtung vorgespannt ist.

5. Ferroelektrische elektrooptische Flüssigkristallanordnung nach Anspruch 4, **dadurch gekennzeichnet,** daß der Winkel zwischen der Richtung der vorspannung und der Richtung der einachsigen Ausrichtungsbehandlung der einen Platte im wesentlichen gleich dem Steigungswinkel des Flüssigkristallmaterials ist.

6. Ferroelektrische elektrooptische Flüssigkristallanordnung nach Anspruch 3, **dadurch gekennzeichnet,** daß die willkürliche homogene Ausrichtung in Richtung der einachsigen Ausrichtungsbehandlung durch Anreiben der Oberfläche der anderen Platte vor der Wärmebehandlung vorgespannt ist.

7. Ferroelektrische elektrooptische Flüssigkristallanordnung nach Anspruch 3, **dadurch gekennzeichnet,** daß die willkürliche homogene Ausrichtung in Richtung der einachsigen Ausrichtungsbehandlung durch Anreiben der Oberfläche der anderen Platte nach der Wärmebehandlung vorgespannt ist.

8. Ferroelektrische elektrooptische Flüssigkristallanordnung nach Anspruch 3, **dadurch gekennzeichnet,** daß die willkürliche homogene Ausrichtung in Richtung der einachsigen Ausrichtungsbehandlung durch Anreiben der Oberfläche der anderen Platte vor der homöotropischen Ausrichtungsbehandlung vorgespannt ist.

9. Ferroelektrische elektrooptische Flüssigkristallanordnung nach Anspruch 1, **dadurch gekennzeichnet,** daß die willkürliche homogene Ausrichtung durch Aufbringen einer Schicht aus Polyimid, Epoxidharz, Polyvinylalkohol, Fluor enthaltendem Polymer, Polyurethan, Silan, Phenol, Harnstoff, Siliziumdioxid oder Magnesiumfluorid auf die Oberfläche der anderen Platte ohne Anreiben realisiert ist.

10. Ferroelektrische elektrooptische Flüssigkristallanordnung nach Anspruch 1, **dadurch gekennzeichnet,** daß die willkürliche homogene Ausrichtung ohne Aufbringen einer Ausrichtungsschicht auf die Oberfläche der anderen Platte realisiert ist.

11. Ferroelektrische elektrooptische Flüssigkristallanordnung nach den Vorhergehenden Ansprüchen, **gekennzeichnet durch** Mittel zur Auswahl von Ein-Aus-Zuständen mittels einer Auswahlspannung ± Vap sowie zur Speicherung der Ein-Aus-Zustände mit einem Wechselimpuls, dessen Breite kleiner als die der Spannung Vap ist und der gleiche positive und negative Amplitude besitzt.

12. Ferroelektrische elektrooptische Flüssigkristallanordnung nach den vorhergehenden Ansprüchen, **dadurch gekennzeichnet,** daß sie eine Anzeigeanordnung ist.

13. Ferroelektrische elektrooptische Flüssigkristallanordnung nach den Ansprüchen 1 bis 11, **dadurch gekennzeichnet,** daß sie ein Verschluß für einen Drucker ist.

Fig.1.

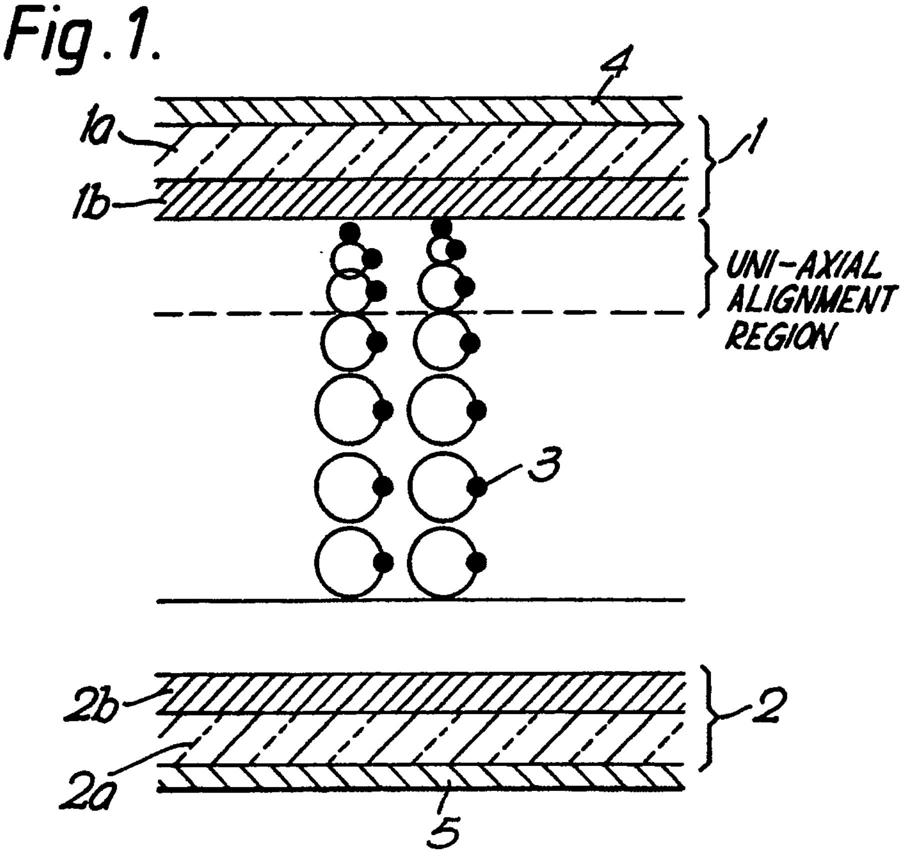
4
1a
1b
1
UNI-AXIAL ALIGNMENT REGION
3
2b
2a
2
5

Fig.2.

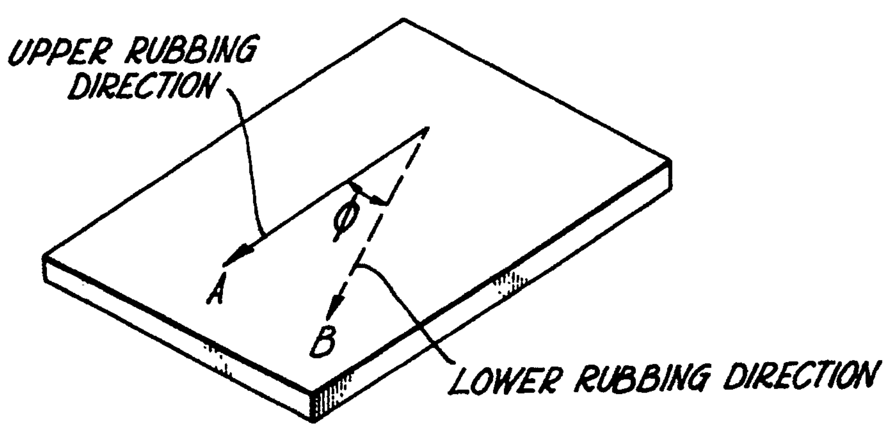
UPPER RUBBING DIRECTION
ϕ
A
B
LOWER RUBBING DIRECTION

Fig.3.

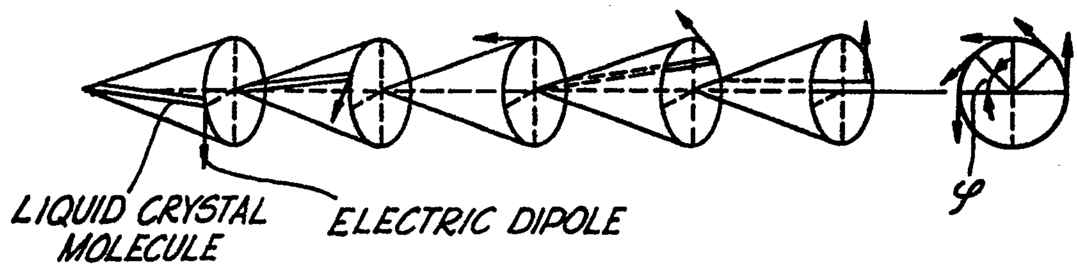


Fig.4(a).

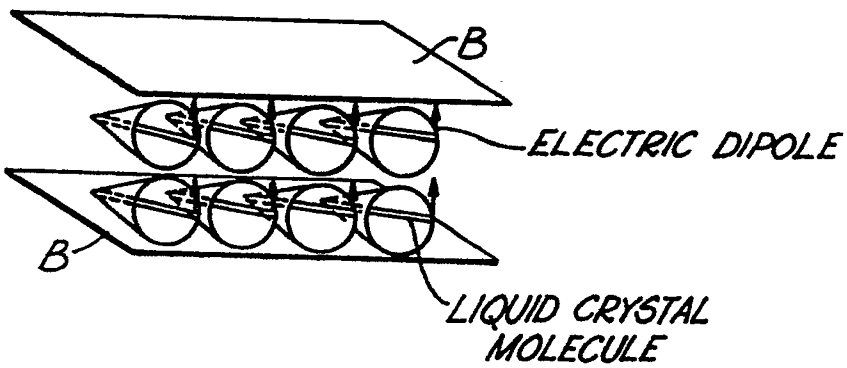


Fig.4(b).

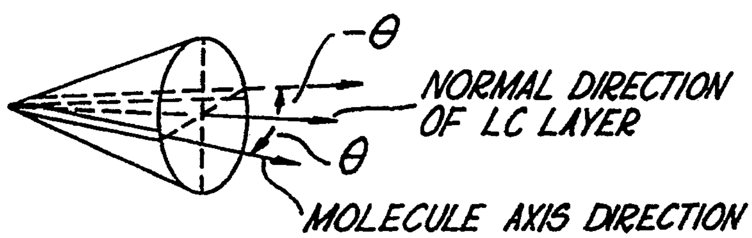

Fig.5.

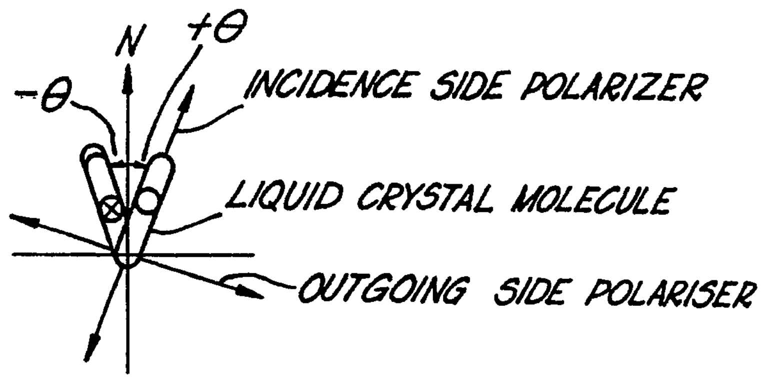
N
+θ
-θ
INCIDENCE SIDE POLARIZER
LIQUID CRYSTAL MOLECULE
OUTGOING SIDE POLARISER

Fig.6.

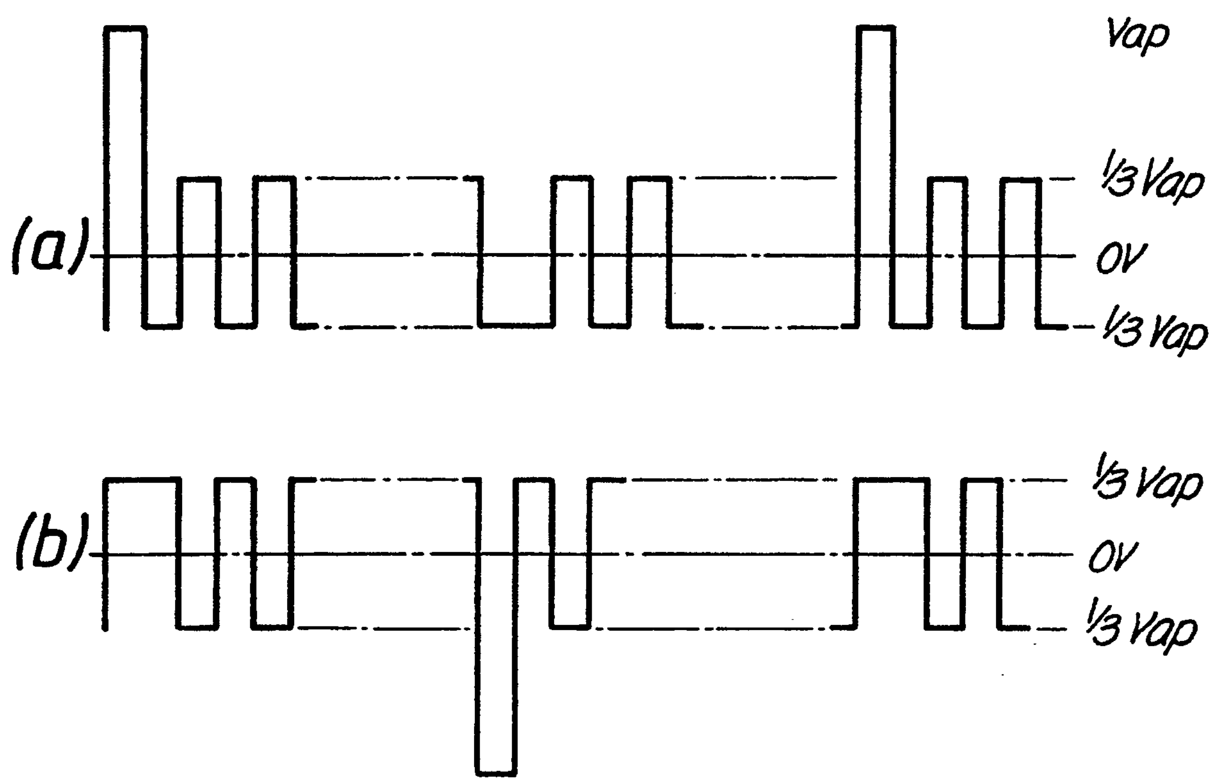
Vap
1/3 Vap
(a)
0V
1/3 Vap
1/3 Vap
(b)
0V
1/3 Vap

Fig.7.

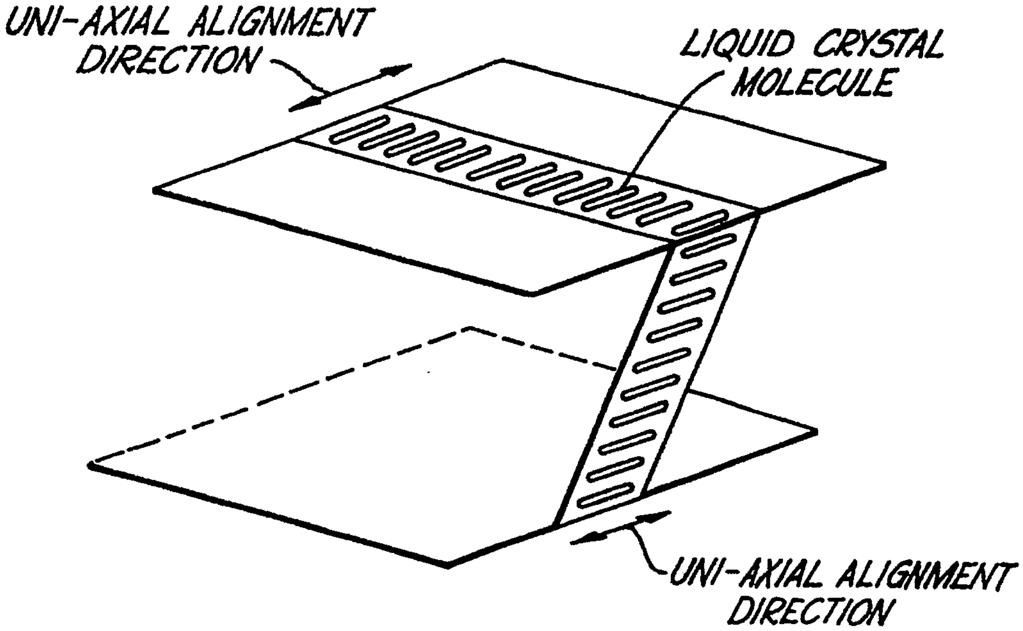
UNI-AXIAL ALIGNMENT DIRECTION
LIQUID CRYSTAL MOLECULE
UNI-AXIAL ALIGNMENT DIRECTION

Fig.8.

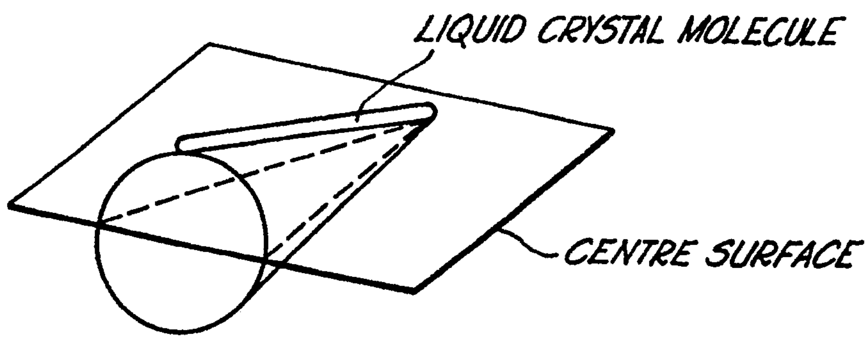
LIQUID CRYSTAL MOLECULE
CENTRE SURFACE